## Europäisches Patentamt
## European Patent Office
## Office européen des brevets

(19)

(11) Numéro de publication: **0 148 657**
**B1**

(12) ## FASCICULE DE BREVET EUROPÉEN

(45) Date de publication du fascicule du brevet:
**12.07.89**

(21) Numéro de dépôt: **84402343.2**

(22) Date de dépôt: **16.11.84**

(51) Int. Cl.⁴: **G 01 T 7/08,** G 01 T 1/40,
G 01 T 1/16

(54) Procédé et appareil de mesure de l'activité d'au moins un produit radioactif.

(30) Priorité: **28.11.83 FR 8318934**

(43) Date de publication de la demande:
**17.07.85 Bulletin 85/29**

(45) Mention de la délivrance du brevet:
**12.07.89 Bulletin 89/28**

(84) Etats contractants désignés:
**AT BE DE IT LU NL**

(56) Documents cité:
**FR-A-1 484 728**
**FR-A-2 177 871**
**GB-A-1 111 121**
**US-A-3 999 068**

**THE REVIEW OF SCIENTIFIC INSTRUMENTS, vol.
32, no. 5, mai 1961, pages 599-600, New York, US;
S.A. SHERBATSKOY: "Stabilized scintillation
counter"**

(73) Titulaire: **COMMISSARIAT A L'ENERGIE
ATOMIQUE, 31/33, rue de la Fédération, F-75015
Paris (FR)**

(72) Inventeur: **Becker, Antoine, La Résidence d'Orsay
Rue Aristide Briand, F-91400 Orsay (FR)**
Inventeur: **Brethon, Jean Pierre Résidence les
Pampriers, Avenue de Champagne Les Ulis,
F-91400 Orsay (FR)**

(74) Mandataire: **Mongrédien, André, c/o BREVATOME
25, rue de Ponthieu, F-75008 Paris (FR)**

EP 0 148 657 B1

**Description**

La présente invention a pour objet un procédé et un appareil de mesure de l'activité d'au moins un produit radioactif. Elle trouve notamment son application dans le domaine clinique (pharmacologie, toxicologie, cancérologie, ...) dans lequel, pour mesurer la concentration d'un corps dans un milieu, on introduit dans ce milieu un produit radioactif réagissant avec ledit corps, par exemple en formant un complexe, et on mesure ensuite l'activité du milieu.

Pour mesurer l'activité d'un produit radioactif, on utilise de manière connue une chaîne de comptage comprenant un premier élément pour convertir le rayonnement gamma émis par le produit radioactif en une émission de photons, un deuxième élément pour convertir cette émission de photons en un signal électrique et un troisième élément pour traiter ce signal électrique et déduire d'un ensemble de ces signaux l'activité du produit radioactif.

Ce produit radioactif est souvent présenté sous forme d'un liquide ou d'un gel contenu dans un tube. La mesure de son activité nécessite généralement plusieurs mesures.

Dans le domaine clinique, il faut en effet mesurer l'activité de tubes standards, c'est-à-dire de tubes dont la concentration en corps à mesurer est connue pour tracer la courbe reliant une concentration à une activité. Cette courbe est ensuite utilisée pour déterminer la concentration d'un corps dans un milieu dont on vient de mesurer l'activité.

Il apparaît ainsi qu'il est nécessaire, pour obtenir le résultat, de réaliser une série de mesures d'activités. Pour diminuer le temps de mesure, l'appareil de mesure comprend donc généralement une pluralité de chaînes de comptage. La durée totale de la mesure est alors bien évidemment minimale, si l'appareil comporte autant de chaînes de comptage que de tubes de produits radioactifs. Malheureusement, cette solution est techniquement trop onéreuse. On utilise donc un nombre limité de chaînes de comptage qui sont disposées sur une couronne circulaire, et un plateau tournant supportant les tubes de produits radioactifs, le nombre de chaînes de comptage étant inférieur au nombre de tubes. L'appareil est alors muni de moyens pour déplacer le plateau tournant afin de présenter successivement chaque tube devant une chaîne de comptage.

Selon l'art connu, le procédé de mesure consiste à présenter simultanément un tube devant chaque chaîne de comptage, à mesurer l'activité de chacun de ces tubes puis à déplacer le plateau tournant de manière à présenter d'autres tubes. Chaque chaîne de comptage traite donc un nombre de tubes égal au rapport entre le nombre de tubes et le nombre de chaînes de comptage. La mesure de l'activité d'un produit radioactif est effectuée, selon ce procédé connu, en une seule fois et par une seule chaîne de comptage. Cette méthode est donc peu sûre.

Avec ce procédé, il est nécessaire d'harmoniser la réponse de chacune des chaînes de comptage si on veut comparer des produits radioactifs mesurés par des chaînes de comptage différentes. Ceci complique l'appareil de mesure.

De plus, avec ce procédé, le comptage est perturbé lorsqu'une des chaînes de comptage tombe en panne. Dans ce cas, une première solution consiste à arrêter l'appareil et à remplacer la chaîne de comptage déficiente. Les échantillons en cours d'analyse sont perdus et une autre analyse doit être entreprise. Une autre solution consiste à traiter normalement tous les groupes de tubes devant être analysés par les chaînes de comptage non déficientes et ensuite à analyser le groupe de tubes de la chaîne de comptage déficiente par une autre chaîne de comptage. Dans les deux cas, la mesure est considérablement ralentie.

Le but de l'invention est de remédier à ces inconvénients et notamment de rendre la mesure plus sûre et de permettre de continuer à utiliser l'appareil de mesure même si une ou plusieurs chaînes de comptage sont en panne.

Un objet de l'invention est un procédé de mesure de type séquentiel. Selon cette méthode, l'activité de chaque produit radioactif est mesurée successivement par chacune des chaînes de comptage, les durées de comptage successives étant adaptés au nombre de chaînes de comptage en fonctionnement correct et à la plus faible activité mesurée. La moyenne pondérée des activités mesurées pour ce produit constitue son activité au sens de l'art antérieur.

Cette méthode séquentielle a pour avantage de ne pas nécessiter de moyens pour harmoniser les chaînes de comptage. En effet, vis-à-vis d'un tube, l'ensemble des chaînes de comptage forme une seule et même chaîne de comptage d'efficacité moyenne.

Par rapport à l'art antérieur, le procédé de l'invention n'augmente pas la durée du comptage. En effet, si l'appareil comporte p chaînes de comptage, chaque tube est présenté à une chaîne de comptage pendant une durée égale à T/p, où T est la durée de mesure d'un tube par une chaîne de comptage selon l'art antérieur.

Selon une caractéristique du procédé selon l'invention, on mesure en outre en permanence en dehors des périodes d'utilisation l'activité à vide de chaque chaîne de comptage et on corrige l'activité du produit radioactif mesurée en fonction de l'activité à vide mesurée.

Ceci permet de s'affranchir des sources de bruit telles que le bruit propre de la chaîne de comptage ou le rayonnement extérieur, terrestre ou cosmique.

Habituellement, on mesure le mouvement propre pendant une durée de comptage. Dans le procédé de l'invention, la mesure du mouvement propre est faite en permanence en dehors des périodes d'utilisation. Il en résulte une très faible erreur sur la valeur du mouvement propre et donc une meilleure précision des mesures d'activité.

Selon une autre caractéristique du procédé de l'invention, on contrôle, en outre, en continu le bon fonctionnement de chaque chaîne de comptage.

Dans ce cas chaque chaîne de comptage mesure l'activité pendant une durée égale à T/p', où p' est le nombre de chaînes de comptage en fonctionnement. Le procédé de l'invention permet donc d'effectuer la mesure même si une ou plusieurs chaînes de comptage tombent en panne, celles qui restent opérationnelles prenant au point de vue de la durée de comptage requise pour une incertitude de mesure visée le relais de celles qui sont en panne.

Selon une autre caractéristique du procédé selon l'invention, dès que l'on a mesuré l'activité de chaque produit radioactif dans au moins une chaîne de comptage, on détermine la plus faible activité mesurée et on adapte la durée de comptage de chaque chaîne de comptage en fonction du niveau de ladite plus faible activité.

Ceci permet de préserver la précision de la mesure en fonction de l'activité. Ce procédé peut être appliqué dans tous les cas, c'est-à-dire que les produits radioactifs contiennent un même corps radioactif ou des corps radioactifs différents.

L'invention a également pour objet un appareil pour la mise en oeuvre du procédé selon l'invention comprenant n tubes contenant chacun un produit radioactif, un support de tubes, p chaînes de comptage munies chacune d'un puits de réception d'un tube, de moyens pour convertir chaque émission radioactive en une impulsion et de moyens de comptage desdites impulsions, un moyen de déplacement pour positionner simultanément p tubes dans les p puits et un moyen de commande et de traitement pour commander le moyen de déplacement et les moyens de comptage et pour calculer l'activité de chaque produit radioactif.

Selon une caractéristique de l'appareil selon l'invention, chaque chaîne de comptage comprend:

- un capteur apte à convertir un rayonnement ionisant en une émission de photons,
- un photomultiplicateur délivrant des impulsions proportionnelles à l'émission de photons reçus,
- un générateur de tension fixant le gain du photomultiplicateur,
- un amplificateur du courant délivré par le photomultiplicateur,
- un moyen de fenêtrage ne délivrant que les impulsions comprises dans la bande énergétique correspondant au corps radioactif élément du produit,
- un moyen de comptage des impulsions délivrées par le moyen de fenêtrage.

Selon une caractéristique secondaire de l'appareil selon l'invention, chaque chaîne de comptage comprend en outre une boucle d'asservissement du gain du photomultiplicateur.

Selon un mode de réalisation préféré, la boucle d'asservissement comprend:

- une source de rayonnement radioactif de faible énergie disposée dans le capteur,
- un second moyen de fenêtrage recevant le signal d'impulsions délivré par l'amplificateur et ne délivrant que les impulsions de faible énergie correspondant à ladite source,
- un moyen de stabilisation délivrant, au vu des impulsions reçues du second moyen de fenêtrage, un signal de commande de la tension du générateur de tension.

Les caractéristiques et avantages de l'invention ressortiront mieux de la description qui va suivre, donnée à titre illustratif mais non limitatif, en référence aux dessins annexés, sur lesquels:

- la figure 1 représente schématiquement un mode de réalisation de l'appareil selon l'invention,
- la figure 2 représente schématiquement un mode de réalisation d'une chaîne de comptage de l'appareil selon l'invention.

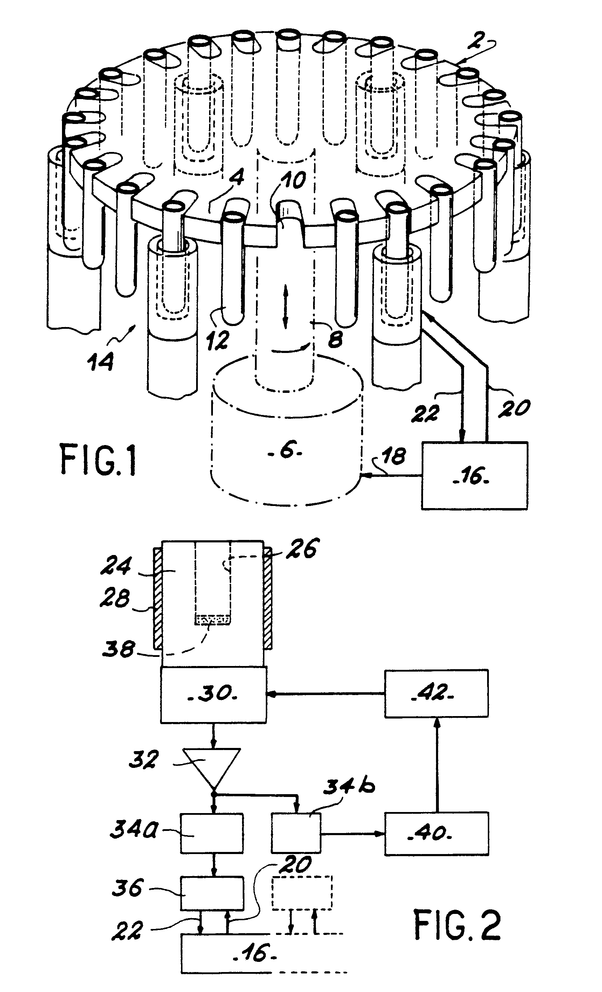

On a représenté sur la figure 1 un appareil de mesure conforme à l'invention. Il comprend un support de tubes 2 constitué d'un plateau circulaire 4 et d'un moteur 6 monté sur un axe 8. Ce support 2 comprend une pluralité de logements 10, disposés régulièrement sur une couronne dans lesquels sont disposés des tubes 12 contenant les produits radioactifs à mesurer. Un ensemble de chaînes de comptage telles que 14 est disposé sur une même couronne d'axe 8.

La mise en oeuvre de cet appareil est realisé par un moyen de commande et de traitement 16 commandant par une connexion 18 le mouvement du support 2 le long de l'axe 8 et le mouvement de ce support en rotation autour de cet axe, commandant par une connexion 20 la mise en marche d'une chaîne de comptage et recevant par une connexion 22 le résultat de ce comptage pendant une durée de mesure.

Bien que l'appareil selon l'invention puisse être équipé de chaînes de comptage en nombre égal à celui des tubes contenant les produits radioactifs, il est préférable, pour des raisons de coût, d'avoir un appareil comportant moins de chaînes de comptage que de tubes.

On va maintenant décrire le procédé de mesure selon l'invention mis en oeuvre par le moyen de commande et de traitement 16. Le support 2 étant dans une position telle que les tubes 12 sont dégagés des chaînes de comptage 14, le moyen de commande et de traitement 16 déplace le support 2 de sorte que les tubes soient à la verticale des chaînes de comptage. Il commande ensuite la descente du support 2 le long de l'axe 8 pour engager un tube dans chaque chaîne de comptage. Le comptage de chaque chaîne de comptage est initialisé par une commande émise sur la connexion 20. A la fin de la durée de comptage, déterminée par le moyen de commande en fonction de différents critères tels que le nombre de chaînes de comptage en fonctionnement correct et la plus faible activité relevée, le moyen de commande et de traitement 16 reçoit par la connexion 22 une valeur correspondant à l'activité du tube.

Par une commande sur la connexion 18, le support est alors relevé, tourné de la valeur d'un secteur puis abaissé. Un nouvel ensemble de tubes est alors présent dans chaque chaîne de comptage. L'activité de chacun de ces tubes est mesurée.

L'opération est répétée jusqu'à ce que chaque tube ait été analysé au moins une fois par chaque chaîne de comptage, ce qui advient lorsque le support a effectué une rotation d'un tour complet. Le moyen de commande et de traitement 16 calcule alors l'activité de chacun des tubes en sommant, pour chacun d'eux, les activités élémentaires relevées par chacune des chaînes de comptage.

Chaque tube est analysé au moins une fois par chaque chaîne de comptage, la précision de la mesure étant améliorée par des passages successifs.

Ce procédé de mesure est intéressant en ce qu'il permet de lier directement les activités des différents tubes analysés, ce qui n'était pas le cas avec le procédé selon l'art antérieur. De plus, l'appareil de la figure 1 continue à fonctionner même si une ou plusieurs chaînes de comptage sont en panne. Il suffit dans ce cas d'augmenter la durée de mesure de chaque tube dans chacune des chaînes de comptage fonctionnant correctement, ceci afin de conserver une durée totale de comptage tenant compte de l'erreur statistique prédéterminée.

Pour obtenir une mesure précise de la radioactivité d'un produit, il est nécessaire d'éliminer le bruit de fond de chaque chaîne de mesure. Ce bruit de fond a deux causes principales: le bruit propre de la chaîne de comptage et le rayonnement extérieur (terrestre et cosmique). Pour diminuer ce bruit de fond, on protège chaque chaîne de comptage par un blindage et on procède à une mesure à vide d'une chaîne de comptage en permanence en dehors des périodes d'utilisation pour évaluer le bruit de fond résiduel. Pour connaître l'activité réelle de chaque produit radioactif, il suffit alors de corriger l'activité mesurée du bruit de fond de chaque chaîne de comptage.

La qualité de la mesure effectuée dépend également de la stabilité de la réponse des chaînes de comptage. On a représenté sur la figure 2 un dessin schématique d'une telle chaîne de comptage. Elle comprend principalement un capteur 24 muni d'une cavité 26 et protégé par un blindage 28, un photomultiplicateur 30, un amplificateur 32, un moyen de fenêtrage 34a et un moyen de comptage 36.

La cavité 26 du capteur 24 est destinée à recevoir un tube contenant un produit radioactif à mesurer. Ce capteur est constitué d'un matériau ayant la propriété d'émettre des photons lumineux proportionnellement à un rayonnement gamma reçu. Ce matériau peut être un cristal de Nal(T1). Les photons lumineux délivrés par ce capteur 24 sont reçus dans le photomultiplicateur 30 qui délivre des impulsions proportionnelles au nombre de photons reçus et à leurs énergies. Un amplificateur 32 reçoit ce signal et l'injecte dans un moyen de fenêtrage 34a.

Ce signal est un signal analogique se présentant sous la forme de pics de tension dont la hauteur représente la valeur énergétique du rayonnement gamma enregistré. L'énergie de ce rayonnement dépend de la nature de l'élément radioactif contenu dans le tube. Le moyen de fenêtrage 34a filtre le signal reçu pour ne laisser passer que les pics dont l'énergie est comprise entre deux limites centrées sur l'énergie nominale du produit radioactif contenu dans le tube. Le moyen de comptage 36 n'a plus alors qu'à compter les pics du signal délivré par le moyen de fenêtrage 34a, ce nombre de pics étant proportionnel au nombre de désintégrations du produit radioactif.

Le problème principal d'une chaîne de comptage réside dans le fait qu'elle est très sensible aux variations de température. Ainsi la hauteur du pic du signal délivré par le photomultiplicateur varie dans le temps et avec la température. Il se peut alors que certains des pics de tension reçus par le compteur 36 ne sont pas en fait représentatifs du rayonnement du produit radioactif contenu dans le tube.

Il est donc nécessaire de stabiliser la réponse du photomultiplicateur. Cette stabilisation est réalisée sur la chaîne de comptage de la figure 2 par une source de rayonnement radioactif 38 située dans le milieu de détection du capteur, dont l'énergie est très inférieure à celle du corps radioactif élément du produit radioactif à mesurer, un second moyen de fenêtrage 34b recevant le signal délivré par l'amplificateur 32 et ne laissant passer que les pics compris entre deux limites centrées sur l'énergie de l'élément radioactif constituant la référence en énergie, un moyen de stabilisation recevant les pics délivrés par le moyen de fenêtrage 34b et délivrant, en fonction de ce signal, une tension de commande au générateur haute tension 42 de commande du photomultiplicateur 30. Le gain du photomultiplicateur 30 est ainsi asservi.

A titre d'exemple, dans le cas d'un produit radioactif contenant de l'iode 125 dont le rayonnement a une énergie de 35 KeV, on peut utiliser pour asservir le gain du photomultiplicateur une source 38 en fer 55 dont le rayonnement a une énergie de 5,9 KeV.

**Revendications**

1. Procédé de mesure de l'activité d'un nombre n de produits radioactifs au moyen de p chaînes de comptage, où $p \leqslant n$ du genre de ceux dans lesquels on mesure simultanément l'activité de p produits radioactifs, ledit procédé étant caractérisé en ce que, pour chacun desdits produits radioactifs, on mesure, pendant des durées de comptage successives adaptées au nombre de chaînes de comptage en fonctionnement correct, et à la plus faible activité mesurée, son activité au moyen de chacune des chaînes de comptage, et en ce qu'on calcule une moyenne pondérée des activités mesurées, cette moyenne pondérée constituant l'activité dudit produit radioactif.

2. Procédé selon la revendication 1, caractérisé en ce que l'activité de chaque produit est mesurée plusieurs fois par chaque chaîne de comptage.

3. Procédé selon l'une quelconque des revendications 1 et 2, caractérisé en ce que, en outre, on mesure en permanence en dehors des périodes d'utilisation l'activité à vide de chaque chaîne de comptage et en ce qu'on corrige l'activité du produit radioactif mesurée en fonction de l'activité à vide mesurée.

4. Procédé selon l'une quelconque des revendications 1 à 3, caractérisé en ce qu'on contrôle, en outre, en continu le bon fonctionnement de chaque chaîne de comptage.

5. Procédé selon l'une quelconque des revendications 1 à 4, caractérisé en ce que, dès que l'on a mesuré l'activité de chaque produit radioactif dans au moins une chaîne de comptage, on détermine la plus faible activité mesurée et on adapte la durée de comptage de chaque chaîne de comptage en fonction du niveau de ladite plus faible activité.

6. Appareil pour la mise en oeuvre du procédé selon l'une quelconque des revendications 1 à 5 comprenant n tubes (12) contenant chacun un produit radioactif, un support de tubes (2), p chaînes de comptage (14) munies chacune d'un puits (26) de réception d'un tube, de moyens pour convertir chaque émission radioactive en une impulsion et de moyens de comptage desdites impulsions, un moyen de déplacement (6) pour positionner simultanément p tubes dans les p puits, ledit appareil étant caractérisé en ce qu'il comprend un moyen de commande et de traitement (16) pour commander le moyen de déplacement et les moyens de comptage et pour calculer l'activité de chaque produit radioactif conformément audit procédé.

7. Appareil selon la revendication caractérisé en ce que chaque chaîne de comptage (14) comprend :

- un capteur (24) apte à convertir un rayonnement ionisant en une émission de photons,
- un photomultiplicateur (30) délivrant des impulsions proportionnelles à l'émission de photons reçus,
- un générateur de tension (42) fixant le gain du photomultiplicateur,
- un amplificateur de la tension (32) délivré par le photomultiplicateur,
- un moyen de fenêtrage (34a) ne délivrant que les impulsions comprises dans la bande énergétique correspondant au corps radioactif,
- un moyen de comptage (36) des impulsions délivrées par le moyen de fenêtrage.

8. Appareil selon l'une quelconque des revendications 6 et 7, caractérisé en ce que chaque chaîne de comptage (14) comprend en outre une boucle d'asservissement du gain du photomultiplicateur (30).

9. Appareil selon la revendication 8, caractérisé en ce que la boucle d'asservissement comprend:

- une source (38) de rayonnement radioactif de faible énergie disposée dans le capteur,
- un second moyen de fenêtrage (34b) recevant le signal d'impulsions délivré par l'amplificateur (32) et ne délivrant que les impulsions de faible énergie correspondant à ladite source (38),
- un moyen de stabilisation (40) délivrant, au vu des impulsions reçues du second moyen de fenêtrage, un signal de commande de la tension du générateur de tension (42).

**Patentansprüche**

1. Verfahren zum Messen der Aktivität einer Anzahl n radioaktiver Produkte mittels p Zählketten, wobei p ⩽ n, von der Art, bei der gleichzeitig die Aktivität von p radioaktiven Produkten gemessen wird, dadurch gekennzeichnet, daß man für jedes der genannten radioaktiven Produkte während aufeinanderfolgender Zählzeiten, die an die Anzahl der korrekt funktionierenden Zählketten und an die schwächste gemessene Aktivität angepaßt sind, die Aktivität mittels jeder der Zählketten mißt, und daß man einen Mittelwert der gemessenen Aktivitäten berechnet, der die Aktivität des genannten radioaktiven Produkts bildet.

2. Verfahren nach Anspruch 1, dadurch gekennzeichnet, daß die Aktivität eines jeden Produktes durch jede Zählkette mehrmals gemessen wird.

3. Verfahren nach einem der Ansprüche 1 und 2, dadurch gekennzeichnet, daß man darüber hinaus ständig außerhalb der Verwendungsperioden die Leeraktivität einer jeden Zählkette mißt und man die gemessene Aktivität des radioaktiven Produkts in Abhängigkeit von der gemessenen Leeraktivität korrigiert.

4. Verfahren nach einem der Ansprüche 1 bis 3, dadurch gekennzeichnet, daß man darüber hinaus fortwährend die gute Funktion einer jeden Zählkette überprüft.

5. Verfahren nach einem der Ansprüche 1 bis 4, dadurch gekennzeichnet, daß man nach der Messung der Aktivität eines jeden radioaktiven Produkts in wenigstens einer Zählkette die schwächste gemessene Aktivität ermittelt und man die Zähldauer einer jeden Zählkette in Abhängigkeit vom Pegel der genannten schwächsten Aktivität anpaßt.

6. Vorrichtung zur Durchführung des Verfahrens nach einem der Ansprüche 1 bis 5, enthaltend n Röhrchen (12), die jeweils ein radioaktives Produkt enthalten, einen Röhrchenträger (2), p Zählketten (14), die jeweils mit einem Schacht (26) zur Aufnahme eines Röhrchens versehen sind, Einrichtungen zum Umwandeln jeder radioaktiven Emission in einen Impuls und Einrichtungen zum Zählen der genannten Impulse, eine Verstelleinrichtung (6), um gleichzeitig p Röhrchen in die p Schächte zu bringen, dadurch gekennzeichnet, daß sie eine Steuer- und Verarbeitungseinrichtung (16) enthält, um die Verstelleinrichtung und die Zähleinrichtungen zu steuern und um die Aktivität eines jeden radioaktiven Produkts entsprechend dem genannten Verfahren zu berechnen.

7. Vorrichtung nach Anspruch 6, dadurch gekennzeichnet, daß jede Zählkette (14) enthält:

- einen Aufnehmer (24), der dazu geeignet ist, eine ionisierende Strahlung in eine Photonenemission umzuwandeln,
- einen Photovervielfacher (30), der Impulse proportional zur Emission empfangener Photonen abgibt,
- einen Spannungsgenerator (42), der die Verstärkung des Photovervielfachers festlegt,
- einen Verstärker für die Spannung (32), die von dem Photovervielfacher geliefert wird,
- eine Fenstereinrichtung (34a), die nur solche Impulse liefert, die in dem dem radioaktiven Körper entsprechenden Energieband liegen,
- eine Zähleinrichtung (36) für die von der Fenstereinrichtung abgegebenen Impulse.

8. Vorrichtung nach einem der Ansprüche 6 und 7, dadurch gekennzeichnet, daß jede Zählkette (14) darüber hinaus eine Regelschleife für die Verstärkung des Photovervielfachers (30) enthält.

9. Vorrichtung nach Anspruch 8, dadurch gekennzeichnet, daß die Regelschleife enthält:

- eine radioaktive Strahlungsquelle (38) geringer Energie, die in dem Aufnehmer angeordnet ist,
- eine zweite Fenstereinrichtung (34b), die das Impulssignal aufnimmt, das von dem Verstärker (32) abgegeben wird, und nur Impulse schwacher Energie entsprechend der genannten Quelle (38) abgibt,
- eine Stabilisierungseinrichtung (40), die im Hinblick auf die von der zweiten Fenstereinrichtung empfangenen Impulse ein Signal zur Beeinflussung der Spannung des Spannungsgenerators (42) liefert.

## Claims

1. Process for measuring the activity of a number n of radioactive products by means of p counting chains, where p ⩽ n of the type of those in which simultaneous measurements are made of the activity of p radioactive products, the said process being characterized in that, for each one of the said radioactive products, measurements are made, during successive counting durations which are matched to the number of counting chains in correct operation and to the lowest activity measured, of its activity by means of each one of the counting chains, and in that a computation is made of a weighted average of the activities measured, this weighted average constituting the activity of the said radioactive product.

2. Process according to Claim 1, characterized in that the activity of each product is measured on a plurality of occasions by each counting chain.

3. Process according to either one of Claims 1 and 2, characterized in that, furthermore, the blank activity of each counting chain is measured permanently outside the periods of use, and in that the measured activity of the radioactive product is corrected as a function of the measured blank activity.

4. Process according to any one of Claims 1 to 3, characterized in that the proper operation of each counting chain is, in addition, continuously monitored.

5. Process according to anyone of Claims 1 to 4, characterized in that, as soon as the activity of each radioactive product has been measured in at least one counting chain, the lowest activity measured is determined and the counting duration of each counting chain is matched as a function of the level of the said lowest activity.

6. Apparatus for carrying out the process according to any one of Claims 1 to 5, comprising n tubes (12) each containing a radioactive product, a tube support (2), p counting chains (14) each equipped with a well (26) to receive a tube, means for converting each radioactive emission into a pulse and means for counting the said pulses, a displacement means (6) for simultaneously positioning p tubes within the p wells, the said apparatus being characterized in that it comprises a command and processing means (16) to command the displacement means and the counting means and to compute the activity of each radioactive product in accordance with the said process.

7. Apparatus according to Claim 6, characterized in that each counting chain (14) comprises:

- a sensor (24) capable of converting an ionizing radiation into an emission of photons,
- a photomultiplier (30) delivering pulses proportional to the emission of photons received,
- a voltage generator (42) specifying the gain of the photomultiplier,
- an amplifier of the voltage (32) delivered by the photomultiplier,
- a window-defining means (34a) delivering only the pulses included within the energy band corresponding to the radioactive substance,
- a means (36) for counting the pulses delivered by the window-defining means.

8. Apparatus according to either one of Claims 6 and 7, characterized in that each counting chain (14) further comprises a loop for the automatic control of the gain of the photomultiplier (30).

9. Apparatus according to Claim 8, characterized in that the automatic control loop comprises:

- a source (38) of low-energy radioactive radiation, disposed within the sensor,
- a second window-defining means (34b) receiving the pulse signal delivered by the amplifier (32) and delivering only the low-energy pulses corresponding to the said source (38),
- a stablizing means (40) delivering, on being exposed to the pulses received from the second window-defining means, a signal for controlling the voltage of the voltage generator (42).

FIG.1

FIG.2

1